(19) Europäisches Patentamt
European Patent Office
Office européen des brevets

(11) Veröffentlichungsnummer: **0 152 784**
**B1**

# (12) EUROPÄISCHE PATENTSCHRIFT

(45) Veröffentlichungstag der Patentschrift: **28.10.87**

(51) Int. Cl.⁴: **C 07 C 101/18**, C 07 C 99/00, C 08 F 2/24

(21) Anmeldenummer: **85100646.0**

(22) Anmeldetag: **23.01.85**

(54) **Fluoralkylgruppen enthaltende Salze von beta-Alkylaminopropionsäureestern, Verfahren zu ihrer Synthese und deren Verwendung zur Herstellung wässriger, fluoralkylgruppenhaltiger Polyacrylatdispersionen.**

(30) Priorität: **04.02.84 DE 3403880**

(43) Veröffentlichungstag der Anmeldung: **28.08.85 Patentblatt 85/35**

(45) Bekanntmachung des Hinweises auf die Patenterteilung: ***28.10.87 Patentblatt 87/44***

(84) Benannte Vertragsstaaten: **AT BE CH DE FR GB IT LI NL SE**

(56) Entgegenhaltungen:
**EP - A - 0 035 640**
**DE - A - 1 643 568**
**DE - A - 1 925 841**
**DE - A - 3 201 079**
**FR - A - 2 022 344**

(73) Patentinhaber: **HOECHST AKTIENGESELLSCHAFT, Postfach 80 03 20, D-6230 Frankfurt am Main 80 (DE)**

(72) Erfinder: **Ramloch, Herbert, Dr., Eichhornweg 3, D-6232 Bad Soden am Taunus (DE)**
Erfinder: **Seidel, Manfred, Völklingeer Weg 68, D-6000 Frankfurt am Main 71 (DE)**
Erfinder: **Lause, Joachim, Loreleistrasse 14, D-6230 Frankfurt am Main 80 (DE)**
Erfinder: **Waldmann, Karl, Dr., Am Rehsteig 25, D-6232 Bad Soden am Taunus (DE)**

EP 0 152 784 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, monomere fluorhaltige Acrylsäurederivate in wässriger Dispersion in Gegenwart von kationischen oder anionischen Emulatoren zu polymerisieren. Unter wässrigen Dispersionen werden daher Polymerdispersionen verstanden die organische Lösemittel enthalten können, aber mit Wasser sehr stark verdünnbar sein müssen. Diese wässrigen Polymerdispersionen, deren wesentliche Komponente aus perfluoralkylhaltigen Acrylsäureestern bestehen, finden eine breite Anwendung bei der Veredlung von Textilgeweben, die dann oleophobe und auch hydrophobe Eigenschaften haben.

Bei der Herstellung dieser wässrigen Polymerdispersionen werden Emulgatoren benötigt, die ein sehr gutes Dispergiervermögen für die eingesetzten Monomeren, aber auch für die entstandenen Polymeren haben. Die hierfür brauchbaren, bisher bekannten Emulgatoren bestehen aus einem Perfluoralkylteil und einem anionaktiven, oder kationaktiven Anteil. Oft wird ein derartiger Emulgator kombiniert mit einem fluorfreien Emulgator und meist noch gemeinsam mit einem Lösemittel eingesetzt um eine stabile, mit Wasser verdünnbare Polymerdispersion zu erhalten. Durch den hydrophilen Bestandteil der Emulgatoren wird der mit wässrigen, fluorhaltigen Polymerdispersionen erzielbare oleo- und hydrophobe Effekt beeinträchtigt.

Der hier beschriebenen Erfindung liegt der Gedanke zu Grunde wässrige, fluorhaltige Polymerdispersionen mit Hilfe eines Emulgators herzustellen, der unter den Bedingungen der Ausrüstung von Textilgeweben mit derartigen in Wasser dispergierten, fluorhaltigen Polymeren in 2 Teilstücke zerfällt, in einen hydrophoben, fluorhaltigen Teil und einen hydrophilen Teil. Damit wäre der Emulgator unwirksam, das Redispergieren des fluorhaltigen Polymeren unmöglich und eine Steigerung des gewünschten Ausrüstungseffektes durch das hydrophobe Teilstück des Emulgators gegeben. Eine weitere Effektsteigerung ist dadurch möglich, dass dieses fluorhaltige Emulgatorbruchstück eine funktionelle Gruppe besitzt, mit der eine Verbindung mit dem Textilgewebe, mit sich selbst, oder Bestandteilen der Ausrüstung geknüpft werden kann.

Bekannt ist durch die Schweizer Patentschrift 280 474, dass α,β-ungesättigte Carbonsäureester aus β-Halogencarbonsäureestern durch Abspalten von HCl mit Hilfe von Trimethylamin bei ca. 80-90°C hergestellt werden können. Diese HCl-Abspaltung erfolgt über das quartäre Ammoniumsalz, das unter diesen Bedingungen nicht beständig ist.

Gegenstand der Erfindung sind neue Fluoralkylgruppen enthaltende Salze von β-Alkylaminopropionsäureestern der allgemeinen Formel

$$C_nF_{2n+1}\text{-}CH_2\text{-}CH_2\text{-}O\text{-}\underset{\underset{O}{\|}}{C}\text{-}CH_2\text{-}CH_2\text{-}{}^{\oplus}\overset{\overset{R_1}{|}}{\underset{\underset{R_3}{|}}{N}}\text{-}R_2\ \ X^{\ominus}$$

wobei

n eine Zahl von 4-12, vorzugsweise 6-8,

$R_1$ Wasserstoff oder Methyl, vorzugsweise Wasserstoff,

$R_2$ und $R_3$ $C_1$-$C_6$-Alkyl, vorzugsweise Propyl oder Butyl und

X Halogen, $HSO_4$ oder Anionen organischer Säuren mit 1 bis 4 C-Atomen, oder $CH_3OSO_3$, vorzugsweise Chlor, bedeuten.

Der Syntheseweg zu diesen Verbindungen geht von dem Acrylsäure-ethylperfluoralkylester I aus, an den ein sekundäres Amin angelagert wird.

Es entsteht ein β-Dialkylaminopropionsäureethylperfluoralkylester (II) und durch nachfolgende Quarternierung, z.B. mit Dimethylsulfat, das quartäre Ammoniumsalz III.

$$\underset{\text{I}}{C_nF_{2n+1}\text{-}CH_2\text{-}CH_2\text{-}O\text{-}\overset{\overset{O}{\|}}{C}\text{-}CH=CH_2} + HN\begin{matrix}R_1\\ \\ R_2\end{matrix} \rightarrow$$

$$\underset{\text{II}}{C_nF_{2n+1}\text{-}CH_2\text{-}CH_2\text{-}O\text{-}\overset{\overset{O}{\|}}{C}\text{-}CH_2\text{-}CH_2\text{-}N}\begin{matrix}R_1\\ \\ R_2\end{matrix}$$

$$\text{I} + (CH_3O)_2SO_2 \rightarrow$$

$$\underset{\text{III}}{C_nF_{2n+1}\text{-}CH_2\text{-}CH_2\text{-}O\text{-}\overset{\overset{O}{\|}}{C}\text{-}CH_2\text{-}CH_2\text{-}}{}^{\oplus}\overset{\overset{CH_3}{|}}{\underset{\underset{R_2}{|}}{N}}\text{-}R_1\ CH_3OSO_3^{\ominus}$$

$n = 4$ bis 12,
$R_1 = R_2 = C_aH_{2a+1}$, $a = 1$ bis 6.

Der Perfluoralkylrest in den Verbindungen I bis III besteht aus 4 bis 12 C-Atomen, wobei die besten Emulgatoreigenschaften bei 6 bis 8 C-Atomen erhalten werden. $R_1$ und $R_2$ enthalten 1 bis 6 C-Atome, vorzugsweise 2 - 4 C-Atome.

Als besonders wirksame Emulgatorsysteme erweisen sich die Kombinationen von Verbindungen der Formel III mit $C_4$ bis $C_{12}$-Alkyl-phenolen kondensiert mit 5 bis 25 Mol Ethylenoxid, oder mit Alkoholen mit 10 bis 18 C-Atomen kondensiert mit 5 bis 25 Mol Ethylenoxid, insbesondere Kombinationen mit Cocosfettalkohol kondensiert mit 5 bis 15 Mol Ethylenoxid oder mit einem $C_{16}/C_{18}$-Alkoholgemisch (ca. 33/66 %) kondensiert mit 8 bis 25 Mol Ethylenoxid.

Bei der Herstellung von 100 Tl einer wässrigen Polymerdispersion mit 20 - 25 Tl Perfluoralkylacrylaten werden 2,5 - 4 Tl einer Verbindung der Formel III und 1 - 2,5 Tl der obengenannten Ethylenoxid Kondensationsprodukte benötigt. Ein Lösungsmittelzusatz ist nicht erforderlich. Es wird eine sehr transparente, wässrige Dispersion erhalten.

Die Beständigkeit solcher Dispersionen bei 20 - 25°C beträgt ca. 3 Monate, bei 40 - 50°C ca. 1 - 2 Tage. Der Emulgator III, als 100%iges Produkt, ist nur wenige Tage bei Raumtemperatur lagerfähig. Die Aufspaltung des quartären Ammoniumsalzes III in

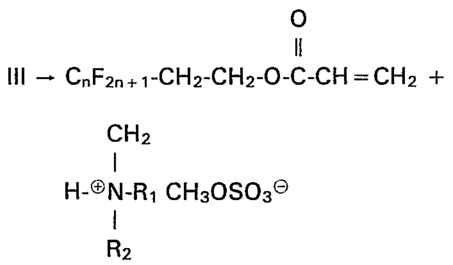

den Acrylsäureester I erfolgt also bereits bei 20 bis 25°C.

Überraschenderweise wurde auch gefunden, dass wässrige, fluorhaltige Polymerdispersionen mit gleicher Transparenz aber erhöhter thermischer Stabilität — die Lagerfähigkeit ist grösser als 4 Wochen bei 50° — erhalten werden können, wenn statt der quartären Verbindung III, das Vorprodukt, der β-Dialkylamino-propionsäureester II als Salz, z.B. als Hydrochlorid, verwendet wird. Die Emulgatormischung in Kombination mit den obengenannten Oxethylaten ist ebensogut wie bei dem Emulgatorsystem mit dem quartären Salz III, wenn 4 - 6 Tl der Verbindung II als Salz, z.B. als Hydrochlorid, mit 1 - 3 Tl der genannten Oxethylate für die Herstellung von 100 Tl wässriger Polymerdispersion mit 20 - 25 Tl Perfluoralkylacrylaten verwendet werden. Das Amin II ist unbegrenzt bei Raumtemperatur lagerfähig und wird erst bei der Anwendung durch Zufügen von z.B. Salzsäure oder verdünnter Schwefelsäure in das Salz übergeführt. Die Aufspaltung dieses fluorhaltigen β-Alkylaminopropionsäureester-Salzes erfolgt oberhalb 100° in den entsprechenden Acrylsäureester und das Salz des Dialkylamins.

Diese erfindungsgemässen Verbindungen haben als Hauptbestandteil eines Emulgatorsystems ein ausgezeichnetes Emulgiervermögen für die fluorhaltigen Acrylsäureester in Wasser, so dass die Emulsionspolymerisation leicht durchführbar ist. Überraschend transparent und gut lagerfähig sind die so ohne Verwendung organischer Lösemittel hergestellten wässrigen Polymerdispersionen mit etwa 17 bis 18% Fluorgehalt.

Die mit diesen Emulgatoren hergestellten fluorhaltigen wässrigen Polymerdispersionen bewirken auf den damit ausgerüsteten Textilgeweben besonders gute Oleophob- und Hydrophobeffekte, da unter den Bedingungen der Ausrüstung, bei Temperaturen oberhalb 100°C, der Emulgator unwirksam wird.

*Beispiele*

1. *Herstellung eines β-Dialkylaminopropionsäureethyl-perfluoralkylesters:*

42 g (0,1 Mol) Acrylsäure-ethylperfluorhexylester werden vorgelegt und unter Rühren 12,9 g (0,1 Mol) Dibutylamin zugegeben. Nach Abklingen der Wärmetönung ist die Reaktion beendet. Der so entstandene β-Dibutylaminoproprionsäure-ethylperfluorhexylester ist ein farbloses Öl.

1.1. Beim Einsatz von bei Raumtemperatur festen Acrylsäureestern, z.B. von Acrylsäure-ethylperfluordecylester, werden diese gelöst vorgelegt und nach Beendigung der Reaktion das Lösemittel abdestilliert. Isopropanol ist hierbei als Lösemittel gut geeignet.

1.2. Die Reaktion mit z.B. Diethylamin, Dipropylamin oder Dihexylamin verläuft in gleicher Weise wie bei 1 und 1.1 beschrieben.

2. *Herstellung eines β-Dialkylammonium-propionsäure-ethylperfluoralkyl-ester-Salzes:*

Durch Einleiten von HCl-Gas in die Isopropanollösung von β-Dialkylamino-propionsäureethylperfluoralkylester und nachfolgendes Abdestillieren des Alkohols wird das entsprechende β-Dialkylaminopropionsäure-ethylperfluoralkylester-hydrochlorid gewonnen.

2.1. Für die Weiterverwendung als Emulgator für wässrige Dispersionen ist es vorteilhaft, diese Salze dadurch herzustellen, dass man die β-Dialkylamino-propionsäure-ester-Verbindung durch Rühren in Wasser verteilt und z.B. Salzsäure, verdünnte Schwefelsäure, Essigsäure oder Glykolsäure zufügt. Die wässrigen Salzlösungen sind so als Emulgatorlösungen verwendbar.

3. *Herstellung eines β-Trialkylammonium-propionsäure-ethylperfluoralkyl-ester-Salzes:*

54,7 g (0,1 Mol) β-Dibutylaminopropionsäure-ethylperfluorhexylester werden in
100 ml Essigsäureethylester gelöst und mit
12,6 g (0,1 Mol) Dimethylsulfat versetzt. Nach Abklingen der Wärmetönung wird der Essigester abdestilliert. Als Rückstand bleibt das farblose kristalline quartäre Ammoniumsalz.

3.1. Für die Weiterverwendung als Emulgator für wässrige Dispersionen ist es vorteilhaft, die Dialkylamino-Verbindung in Wasser durch Rühren zu verteilen und Dimethylsulfat zuzufügen. Nach Abklingen der Wärmetönung ist die Lösung des quartären Salzes als Emulgatorlösung verwendbar.

4. *Herstellung von wässrigen, perfluoralkylgruppenhaltigen Polymerdispersionen:*

Beispiel 4.1.

25 Gewichtsteile eines Acrylsäure-ethylperfluoralkyl-ester-Gemisches der Zusammensetzung von ca.:
- 2,5% $C_6F_{13}CH_2CH_2OCOCH=CH_2$
- 61,5% $C_8F_{17}CH_2CH_2OCOCH=CH_2$
- 27% $C_{10}F_{21}CH_2CH_2OCOCH=CH_2$
- 7,5% $C_{12}F_{25}CH_2CH_2OCOCH=CH_2$
- 1,5% $C_{14}F_{29}CH_2CH_2OCOCH=CH_2$

1 Gewichtsteil Laurylacrylat
0,3 Gewichtsteile Acrylamid und
1,5 Gewichtsteile Stearylalkohol kondensiert mit 15 Mol Ethylenoxid werden vorgelegt und
73 Gewichtsteile einer Lösung, hergestellt durch Verteilen von 5 Gewichtsteilen β-Dibutylamino-propionsäureethylperfluorhexyl-ester in Wasser, mit Salzsäure auf pH 2,5 gestellt und mit Wasser aufgefüllt, werden dazugegeben. Nach dem Aufheizen auf 50°C entsteht unter Rühren eine Emulsion, die bei 50°C unter Stickstoffatmosphäre ca. 30 Minuten gerührt wird. Nun wird die Polymerisation durch Zugabe von
0,1 Gewichtsteilen Azodiisobutyramidin ·2 HCl und Aufheizen auf 65°C gestartet. Nach 3 Stunden unter starkem Rühren bei 65 bis 70°C ist die Polymerisation beendet. Nach Abkühlen

auf Raumtemperatur liegt eine fast wasserklare Polymerdispersion vor.

Beispiel 4.2.

25,00 Gewichtsteile eines Acrylsäure-ethylperfluoralkyl-ester-Gemisches der Zusammensetzung wie im Beispiel 4.1. beschrieben,
1 Gewichtsteil Laurylacrylat
0,3 Gewichtsteile Acrylamid und
1,5 Gewichtsteile Nonylphenol kondensiert mit 8 Mol Ethylenoxid werden vorgelegt und
75 Gewichtsteile einer Lösung, hergestellt aus 3 Gewichtsteilen β-Dibutylaminopropionsäure-ethylperfluorhexyl-ester, die unter Rühren in Wasser verteilt und durch Zugabe von 0,7 Gewichtsteilen Dimethylsulfat quarterniert und nach Abklingen der Reaktionswärme (ca. 45 Min.) mit Wasser auf die gewünschte Konzentration aufgefüllt werden, werden zugegeben. Nach dem Aufheizen auf 50°C entsteht unter Rühren eine Emulsion, die bei 50°C unter Stickstoffatmosphäre ca. 30 Minuten gerührt wird. Nun wird die Polymerisation durch Zugabe von
0,1 Gewichtsteilen Azodiisobutyramidin · 2 HCl,
0,03 Gewichtsteilen Ascorbinsäure und Aufheizen auf 65°C gestartet. Nach 3 Stunden unter starkem Rühren bei 65-70°C ist die Polymerisation beendet. Nach dem Abkühlen auf Raumtemperatur liegt eine fast wasserklare Polymerdispersion vor.

5. *Polymerdispersion, Vergleichbeispiel*

25 Gewichtsteile eines Acrylsäure-ethylperfluoralkylester-Gemisches der ungefähren Zusammensetzung wie in Beispiel 4.1 beschrieben,
1 Gewichtsteil Laurylacrylat,
0,3 Gewichtsteile Acrylamid,
2,5 Gewichtsteile Tetrahydroperfluoroctyl-oxacarbonamidoethylthioschwefelsäure-Na ($C_6F_{13}CH_2CH_2OCONHCH_2CH_2S_2O_3Na$) als Emulgator,
12,5 Gewichtsteile Isopropanol und
59 Gewichtsteile Wasser werden unter $N_2$-Atmosphäre unter Rühren auf 50°C aufgeheizt. Nach 30 Minuten unter Rühren bei 50°C wird durch
0,1 Gewichtsteile Ammoniumperoxidisulfat [$(NH_4)_2S_2O_8$)] und
0,03 Gewichtsteile Ascorbinsäure die Polymerisation gestartet. Bei 50-55°C wird 4 Stunden nachgerührt, dann auf Raumtemperatur abgekühlt.

6. *Vergleichsprüfung der fluorhaltigen, wässrigen Polymerdispersion nach Bsp. 4.1 und Bsp. 5*

Pro 1 l Ausrüstungsflotte wurden eingesetzt:

jeweils 6 g Polymerdispersion nach Bsp. 4.1 bzw. 5
3 g einer 50%igen Lösung eines hochveretherten Melaminmethylol-methylesters und
6 g einer 25%igen Zinksulfatlösung.

Damit wurde ein Polyamid-Taftgewebe imprägniert, auf einen Rückstand von 40% abgequetscht, bei 110°C getrocknet und 20 Sekunden bei 170°C kondensiert.

Die auf diesem Polamid-Taftgewebe gemessenen Hydrophob- und Oleophob-Effekte sind in nachfolgender Tabelle zusammengestellt.

| Prüfung | Bsp. 4.1 | Bsp. 5 |
|---|---|---|
| *Wasserabweisung:* | | |
| *Spray Test* (AATCC 22) | | |
| Umfang | 100 | 90 |
| nach 3 Wäschen bei 60°C | 80 | 50 |
| nach 3 chem. Reinigungen | 100 | 70 |
| *Bundesmann* (DIN 53 888) | | |
| % Wasseraufnahme Anfang | 12,1 | 19,4 |
| nach 3 Wäschen bei 60°C | 32,2 | 32,6 |
| nach 3 chem. Reinigungen | 26,8 | 27,1 |
| ml Durchlauf Anfang | 20 | 32 |
| nach 3 Wäschen bei 60°C | 13 | 42 |
| nach 3 chem. Reinigungen | 28 | 28 |
| *Ölabweisung:* | | |
| *3 M-Test* | | |
| Anfang | 100 | 80 |
| nach 3 Wäschen bei 60° | 90 | 60 |
| nach 3 chem. Reinigungen | 90 | 70 |
| *Test nach AATCC 118* | | |
| Anfang | 5 | 3 |
| nach 3 Wäschen bei 60° | 4 | 1 |
| nach 3 chem. Reinigungen | 4 | 2 |

**Patentansprüche für die Vertragsstaaten:**
BE, CH, DE, FR, GB,IT, LI, NL, SE

1. Verbindungen der allgemeinen Formel 1

$$C_nF_{2n+1}\text{-}CH_2\text{-}CH_2\text{-}O\text{-}\underset{\underset{O}{\|}}{C}\text{-}CH_2\text{-}CH_2\text{-}{}^{\oplus}\overset{\overset{R_1}{|}}{\underset{\underset{R_3}{|}}{N}}\text{-}R_2\ X^{\ominus} \qquad (1)$$

wobei
n eine Zahl von 4-12,
$R_1$ Wasserstoff oder Methyl,
$R_2$ und $R_3$ $C_1$-$C_6$-Alkyl, und
X Halogen, $HSO_4$ oder Anionen organischer Säuren mit 1 bis 4 C-Atomen, oder $CH_3$-$OSO_3$ bedeuten.

2. Verbindungen nach Anspruch 1, dadurch gekennzeichnet, dass n eine Zahl von 6 bis 8, $R_1$ Wasserstoff, $R_2$ und $R_3$ Propyl oder Butyl und X Chlor bedeuten.

3. Verfahren zur Herstellung der Verbindungen nach Anspruch 1, dadurch gekennzeichnet, dass an den Acrylsäureester der allgemeinen Formel (2)

$$C_nF_{2n+1}CH_2\text{-}CH_2\text{-}O\text{-}\underset{\underset{O}{\|}}{C}\text{-}CH=CH_2 \qquad (2)$$

ein sekundäres Amin der allgemeinen Formel 3

$$HN\langle^{R_2}_{R_3} \qquad (3)$$

angelagert und anschliessend der Rest $R_1$ durch Quaternisierung mit einer Verbindung der Formel $R_1$-X eingeführt wird.

4. Mischungen aus Verbindungen nach Anspruch 1 mit $C_4$ bis $C_{12}$-Alkyl-phenolen kondensiert mit 5 bis 25 Mol Ethylenoxid, oder mit Alkoholen mit 10 bis 18 C-Atomen kondensiert mit 5 bis 25 Mol Ethylenoxid.

5. Verwendung der Verbindungen nach Anspruch 1 allein oder zusammen mit Additionsprodukten aus $C_4$-$C_{12}$-Alkylphenolen und 5 bis 25 Mol Ethylenoxid oder Alkoholen mit 10 bis 18 C-Atomen und 5 bis 25 Mol Ethylenoxid als Emulgator zur Herstellung fluorhaltiger, wässriger Polymerdispersionen .

**Patentansprüche für den Vertragstaat: AT**

1. Verfahren zur Herstellung von Verbindungen der allgemeinen Formel 1

$$C_nF_{2n+1}\text{-}CH_2\text{-}CH_2\text{-}O\text{-}\underset{\underset{O}{\|}}{C}\text{-}CH_2\text{-}CH_2\text{-}{}^{\oplus}\overset{\overset{R_1}{|}}{\underset{\underset{R_3}{|}}{N}}\text{-}R_2\ X^{\ominus} \qquad (1)$$

wobei

n eine Zahl von 4-12,
$R_1$ Wasserstoff oder Methyl,
$R_2$ und $R_3$ $C_1$-$C_6$-Alkyl, und
X Halogen, $HSO_4$ oder Anionen organischer Säuren mit 1 bis 4 C-Atomen, oder $CH_3OSO_3$ bedeuten, dadurch gekennzeichnet, dass an den Acrylsäureester der allgemeinen Formel 2

$$C_nF_{2n+1}\ CH_2\text{-}CH_2\text{-}O\text{-}\underset{\underset{O}{\|}}{C}\text{-}CH{=}CH_2 \qquad (2)$$

ein sekundäres Amin der allgemeinen Formel 3

$$HN\langle^{R_2}_{R_3} \qquad (3)$$

angelagert und anschliessend der Rest $R_1$ durch Quaternisierung mit einer Verbindung der Formel $R_1$-X eingeführt wird.

2. Verfahren nach Anspruch 1, dadurch gekennzeichnet, dass man eine Verbindung der Formel 1 herstellt, wobei n eine Zahl von 6 bis 8, $R_1$ Wasserstoff, $R_2$ und $R_3$ Propyl oder Butyl und X Chlor bedeuten.

3. Mischungen aus Verbindungen nach Anspruch 1 mit $C_4$ bis $C_{12}$-Alkyl-phenolen kondensiert mit 5 bis 25 Mol Ethylenoxid, oder mit Alkoholen mit 10 bis 18 C-Atomen, kondensiert mit 5 bis 25 Mol Ethylenoxid.

4. Verwendung der Verbindungen nach Anspruch 1 allein oder zusammen mit Additionsprodukten aus $C_4$-$C_{12}$-Alkylphenolen und 5 bis 25 Mol Ethylenoxid oder Alkoholen mit 10 bis 18 C-Atomen und 5 bis 25 Mol Ethylenoxid als Emulagtor zur Herstellung fluorhaltiger, wässriger Polymerdispersionen.

**Claims for the Contracting States:**
**BE, CH, DE, FR, GB, IT, LI, NL, SE**

1. A compound of the formula 1

$$C_nF_{2n+1}\text{-}CH_2\text{-}CH_2\text{-}O\text{-}\underset{\underset{O}{\|}}{C}\text{-}CH_2\text{-}CH_2\text{-}{}^{\oplus}\overset{\overset{R_1}{|}}{\underset{\underset{R_3}{|}}{N}}\text{-}R_2\ X^{\ominus} \qquad (1)$$

in which

n denotes a number from 4 to 12,
$R_1$ denotes hydrogen or methyl,
$R_2$ and $R_3$ denote $C_1$-$C_6$-alkyl and
X denotes halogen, $HSO_4$ or anions of organic acids having 1 to 4 carbon atoms, or $CH_3OSO_3$.

2. A compound as claimed in claim 1, wherein n denotes a number from 6 to 8, $R_1$ denotes hydrogen, $R_2$ and $R_3$ denote propyl or butyl and X denotes chlorine.

3. A process for the preparation of a compound as claimed in claim 1, wherein a secondary amine of the formula 3

$$HN\langle^{R_2}_{R_3} \qquad (3)$$

is attached by means of an addition reaction to the acrylic acid ester of the formula 2

$$C_nF_{2n+1}\ CH_2\text{-}CH_2\text{-}O\text{-}\underset{\underset{O}{\|}}{C}\text{-}CH{=}CH_2 \qquad (2)$$

and the radical $R_1$ is then introduced by quaternization using a compound of the formula $R_1$-X.

4. A mixture of compounds as claimed in claim 1 and $C_4$ to $C_{12}$ alkylphenols which have been condensed with 5 to 25 moles of ethylene oxide, or alcohols which have 10 to 18 carbon atoms and have been consensed with 5 to 25 moles of ethylene oxide.

5. The use of a compound as claimed in claim 1 on its own or together with an addition product formed from $C_4$-$C_{12}$-alkylphenols and 5 to 25 moles of ethylene oxide or from alcohols having 10 to 18 carbon atoms and 5 to 25 moles of ethylene oxide, as an emulsifier for the production of fluorine-containing, aqueous polymer dispersions.

**Claims for the Contracting State:** AT

1. A process for the preparation of a compound of the formula 1

$$C_nF_{2n+1}\text{-}CH_2\text{-}CH_2\text{-}O\text{-}\underset{\underset{\displaystyle O}{\|}}{C}\text{-}CH_2\text{-}CH_2\text{-}{}^{\oplus}\underset{\underset{\displaystyle R_3}{|}}{\overset{\overset{\displaystyle R_1}{|}}{N}}\text{-}R_2 \quad X^{\ominus} \qquad (1)$$

in which
n denotes a number from 4 to 12,
$R_1$ denotes hydrogen or methyl,
$R_2$ and $R_3$ denote $C_1$-$C_6$-alkyl and
X denotes halogen, $HSO_4$ or anions of organic acids having 1 to 4 carbon atoms, or $CH_3OSO_3$,

wherein a secondary amine of the formula 3

$$HN<^{R_2}_{R_3} \qquad (3)$$

is attached by means of an addition reaction to the acrylic acid ester of the formula 2

$$C_nF_{2n+1}\ CH_2\text{-}CH_2\text{-}O\text{-}\underset{\underset{\displaystyle O}{\|}}{C}\text{-}CH=CH_2 \qquad (2)$$

and the radical $R_1$ is then introduced by quaternization using a compound of the formula $R_1$-X.

2. A process as claimed in claim 1 for the preparation of a compound of formula 1, wherein n denotes a number from 6 to 8, $R_1$ denotes hydrogen, $R_2$ and $R_3$ denote propyl or butyl and X denotes chlorine.

3. A mixture of compounds as claimed in claim 1 and $C_4$ to $C_{12}$ alkylphenols which have been condensed with 5 to 25 moles of ethylene oxide, or alcohols which have 10 to 18 carbon atoms and have been condensed with 5 to 25 moles of ethylene oxide.

4. The use of a compound as claimed in claim 1 on its own or together with an addition product formed from $C_4$-$C_{12}$-alkylphenols and 5 to 25 moles of ethylene oxide or from alcohols having 10 to 18 carbon atoms and 5 to 25 moles of ethylene oxide, as an emulsifier for the production of fluorine-containing, aqueous polymer dispersions.

**Revendications pour les Etats contractants:**
BE, CH, DE, FR, GB, IT, LI, NL, SE

1. Composé de formule générale 1:

$$C_nF_{2n+1}\text{-}CH_2\text{-}CH_2\text{-}O\text{-}\underset{\underset{\displaystyle O}{\|}}{C}\text{-}CH_2\text{-}CH_2\text{-}{}^{\oplus}\underset{\underset{\displaystyle R_3}{|}}{\overset{\overset{\displaystyle R_1}{|}}{N}}\text{-}R_2 \quad X^{\ominus} \qquad (1)$$

dans laquelle:
n est un nombre valant 4 à 12,
$R_1$ représente un atome d'hydrogène ou un groupe méthyle,
$R_2$ et $R_3$ représentent chacun un groupe alkyle en $C_1$-$C_6$, et
X représente un halogène, $HSO_4$ ou des anions d'acides organiques comportant 1 à 4 atomes de carbone, ou $CH_3OSO_3$.

2. Composé selon la revendication 1, caractérisé en ce que n représente un nombre valant 6 à 8, $R_1$ représente un atome d'hydrogène, $R_2$ et $R_3$ représentent un groupe propyle ou butyle et X représente du chlore.

3. Procédé pour préparer les composés selon la revendication 1, caractérisé en ce qu'on fixe, sur l'ester d'acide acrylique de formule générale (2):

$$C_nF_{2n+1}\ CH_2\text{-}CH_2\text{-}O\text{-}\underset{\underset{\displaystyle O}{\|}}{C}\text{-}CH=CH_2 \qquad (2)$$

une amine secondaire de formule générale:

$$HN<^{R_2}_{R_3} \qquad (3)$$

et l'on introduit ensuite le reste $R_1$ par quaternisation à l'aide d'un composé de formule $R_1$-X.

4. Mélanges de composés selon la revendication 1, avec des alkyl(en $C_4$-$C_{12}$)phénols condensés avec 5 à 25 moles d'oxyde d'éthylène ou avec des alcools, ayant 10 à 18 atomes de carbone, condensés avec 5 a 25 moles d'oxyde d'éthylène.

5. Utilisation des composés selon la revendication 1, isolément ou avec des produits d'addition d'alkyl(en $C_4$-$C_{12}$)phénols et de 5 à 25 moles d'oxyde d'éthylène ou avec des alcools ayant 10 à 18 atomes de carbone et condensés avec 5 à 25 moles d'oxyde d'éthylène, comme émulsifiants pour préparer des dispersions aqueuses de polymères fluorés.

**Revendications pour l'Etat contractant:** AT

1. Procédé pour préparer des composés de formule générale 1:

$$C_nF_{2n+1}\text{-}CH_2\text{-}CH_2\text{-}O\text{-}\underset{\underset{\displaystyle O}{\|}}{C}\text{-}CH_2\text{-}CH_2\text{-}{}^{\oplus}\underset{\underset{\displaystyle R_3}{|}}{\overset{\overset{\displaystyle R_1}{|}}{N}}\text{-}R_2 \quad X^{\ominus} \qquad (1)$$

dans laquelle:
n est un nombre valant 4 à 12,
$R_1$ représente un atome d'hydrogène ou un groupe méthyle,
$R_2$ et $R_3$ représentent chacun un groupe alkyle ayant 1 à 6 atomes de carbone, et
X représente un halogène, $HSO_4$ ou des anions d'acides organiques comportant 1 à 4 atomes de carbone ou $CH_3OSO_3$,

procédé caractérisé en ce qu'on fixe, sur l'ester d'acide acrylique de formule générale 2:

$$C_nF_{2n+1}\ CH_2\text{-}CH_2\text{-}O\text{-}\underset{\underset{O}{\|}}{C}\text{-}CH=CH_2 \qquad (2)$$

une amine secondaire de formule générale 3:

$$HN\begin{matrix} R_2 \\ \\ R_3 \end{matrix} \qquad (3)$$

et l'on introduit ensuite le reste $R_1$ par quaternisation à l'aide d'un composé de formule $R_1$-X.

2. Procédé selon la revendication 1, caractérisé en ce qu'on prépare un composé de formule (1), dans laquelle n est un nombre valant 6 à 8, $R_1$ représente un atome d'hydrogène, $R_2$ et $R_3$ représentent chacun un groupe propyle ou butyle et X représente du chlore.

3. Mélange de composés selon la revendication 1, avec des alkyl(en $C_4$-$C_{12}$)phénols condensés avec 5 à 25 moles d'oxyde d'éthylène, ou avec des alcools comportant 10 à 18 atomes de carbone et qui sont condensés avec 5 à 25 moles d'oxyde d'éthylène.

4. Utilisation des composés selon la revendication 1, isolément ou avec des produits d'addition d'alkyl(en $C_4$-$C_{12}$)phénols et de 5 à 25 moles d'oxyde d'éthylène ou d'alcools, comportant 10 à 18 atomes de carbone) et de 5 à 25 moles d'oxyde d'éthylène comme émulsifiants pour préparer des dispersions aqueuses de polymères fluorés.